# EUROPÄISCHE PATENTSCHRIFT

(11) **EP 2 883 748 B1**
(45) Veröffentlichungstag und Bekanntmachung des Hinweises auf die Patenterteilung: **18.10.2017**
(21) Anmeldenummer: 14002670.9
(22) Anmeldetag: 31.07.2014
(51) Int. Cl.: B60R 1/00, G02B 27/01

(54) **Verfahren zur Anzeige von optischen Informationen in Fahrzeugen**
Method for displaying visual information in vehicles
Procédé d'affichage d'informations optiques dans des véhicules

(30) Priorität: 13.12.2013 DE 102013021150
(43) Veröffentlichungstag der Anmeldung: 17.06.2015
(73) Patentinhaber: MAN Truck & Bus AG, 80995 München (DE)
(72) Erfinder: Mohra, Holger, 80805 München (DE)
(74) Vertreter: Liebl, Thomas

(56) Entgegenhaltungen:
- WO-A1-98/28649
- DE-A1- 19 813 300
- US-A- 4 961 625
- US-A1- 2013 138 392

## Beschreibung

Gegenstand der Erfindung ist ein Verfahren und eine Anordnung zur Anzeige von optischen Informationen in Fahrzeugen im zentralen Sichtfeld des Fahrers derart, dass sich eine Überlagerung dieser Anzeige (virtuelles Bild) mit der realen Verkehrsumgebung ergibt.

Eine ständig zunehmende Verkehrsdichte einerseits und eine wachsende Anzahl von Funktionalitäten in Fahrzeugen, insbesondere Nutzfahrzeugen, wie zum Beispiel Fahrerassistenzsysteme, erhöht die Notwendigkeit vielfältigste Informationsrückmeldungen an den Fahrer zu geben, ohne dessen Aufmerksamkeit vom Verkehrsgeschehen abzulenken. Die üblichen im Fahrzeug hauptsächlich am Armaturenbrett angeordneten Anzeigen stoßen hier an ihre Grenzen, insbesondere auch deshalb, weil diese sogenannten Head-Down-Displays es einerseits erfordern, dass sich der Fahrer vom Verkehrsgeschehen abwendet und andererseits, weil mit dem Blick auf das Armaturenbrett ständige Akkomodations-, Fixations- und Adaptionsvorgänge des Auges verbunden sind, die den Fahrer stark ablenken und in Folge die Sicherheit im Straßenverkehr gefährden und den Komfort des Fahrers beeinträchtigen. Um dem entgegenzuwirken werden aus der Luftfahrt bekannte sogenannte Head-Up-Displays zunehmend in Straßen- und Schienenfahrzeugen eingesetzt. Derartige Head-Up-Displays bestehen aus einer Projektionseinheit und einem teilreflektierenden sogenannten "Combiner". Der Combiner reflektiert einerseits die von der Projektionseinheit auf diesen projizierten Bildinhalte in Richtung Fahrerauge und liegt andererseits so in der Blickrichtung des Fahrers, dass dieser beim Beobachten des vor ihm liegenden Verkehrsgeschehens durch diesen blickt, so dass sich eine Überlagerung des realen vom Fahrerauge aufgenommenen Verkehrsgeschehens mit den projizierten Bildinhalten ergibt. Eine geeignete Neigung der Windschutzscheibe vorausgesetzt, kann diese als Combiner dienen. Die Projektionseinheit besteht aus einem Bildgeber und einer Abbildungsoptik, wobei die letztgenannte eine Reihe optischer Elemente wie zum Beispiel Linsen und Spiegel enthält und durch ihre Auslegung sowie ihre Entfernung vom Combiner den virtuellen Abstand bestimmt, in dem das projizierte Bild dem Fahrer erscheint.

Als problematisch bei solchen Head-Up-Displays hat sich erwiesen, dass durch den festen virtuellen Abstand, in dem das projizierte Bild dem Fahrer erscheint, ständige Wechsel zwischen unterschiedlichen Fokussierebenen (Anzeigeinhalt und Objekten der Umwelt) notwendig sind, was den Fahrer stark ablenkt, beansprucht und ermüdet.

Um hier Abhilfe zu schaffen wird, in der DE 10 2010 002 956 A1 ein Head-up Display für Fahrzeuge vorgeschlagen, das Informationen mittels einer Projektionseinheit auf eine durchsichtige Fläche projiziert, wobei die Projektionseinheit so angeordnet und ausgebildet ist, dass das virtuelle Bild in verschiedenen Fokussierungsebenen oder in verschiedenen Darstellungsweisen, die sich in anderen optischen Abbildungsparametern unterscheiden, darstellbar ist. Diese Vorgehensweise ermöglicht zwar eine Anpassung des virtuellen Bildes an unterschiedliche Fokussierungsebenen, löst aber das Problem der ständigen Akkomodations-, Fixations- und Adaptionsvorgänge der Augen des Fahrers nicht, weil nicht bekannt ist, in welcher Ebene diese aktuell fokussieren, so dass auch keine Einstellung auf die aktuelle Fokussierebene des Fahrers vorgenommen werden kann.

Weiter ist in der DE 10 2010 002 956 A1 ausgeführt, dass sogenannte "Augmented Reality Head-Up-Displays" Informationen optisch an eine sichtbare Szene anpassen, in der Weise, dass eine Kamera ein im Sichtbereich des Fahrers aufgenommenes Bild nach Bildinhalten analysiert und eine darzustellende Information so darstellt, dass sie ohne störende Wirkung einem real gesehenen Gegenstand zugeordnet erscheint also eine erweiterte Realität bildet. Hierbei wird zwar dem Umstand Rechnung getragen, dass dann, wenn der Fahrer auf den Gegenstand fokussiert die Information ohne störendes Akkommodieren erfasst werden kann, nicht aber dann, wenn der augenblickliche Fokus des Fahrers in einer anderen Fokussierebene liegt. Ebenfalls unbeachtet bleibt, dass die jeweils als optimal empfundene virtuelle Entfernung der dargestellten Information auch von persönlichen Gegebenheiten des Fahrers abhängt.

Weiter zeigt die WO 98/28649 A1 ein Informationsanzeigesystem mit einem Ausgabedisplay zur Darstellung von Informationen, wobei optische Mittel vorgesehen sind, die einen Beleuchtungsstrahlengang in das Blickfeld des Betrachters lenken. Das Informationsanzeigesystem kann ferner Mittel aufweisen, die die Abbildung auf dem Videodisplay elektronisch derart verschieben können, dass sich dem Betrachter ein möglichst großer Ausschnitt der Abbildung, auch bei starker Veränderung der Betrachterposition, darbietet. Die Abbildung auf dem Display kann dabei elektronisch verschoben werden, und zwar dergestalt, dass der Beleuchtungsstrahlengang dem Betrachter immer noch die gesamte Abbildung sichtbar darstellt. Bewegt sich der Betrachter über eine bestimmte vorgegebene Grenze hinaus, so kann die Abbildung weitergehend elektronisch verändert werden, zum Beispiel verkleinert werden, so dass der Betrachter immer noch die vollständige Information dargeboten bekommt.

Ausgehend vom vorstehend angegebenen Stand der Technik ist es deshalb Aufgabe des erfindungsgemäßen Verfahrens, die Projektionseinheit eines Head-Up-Displays so anzusteuern, dass bei Betrachtung der virtuellen Bildinhalte Akkomodations-, Fixations- und Adaptionszeiten des Fahrerauges minimiert und sicherheitskritische Verdeckungen der realen Umgebung verhindert werden. Weiter gehört es zur Aufgabe der Erfindung, eine Anordnung zur Durchführung des Verfahrens anzugeben.

Gelöst wird die Aufgabe hinsichtlich des Verfahrens durch die kennzeichnenden Merkmale des Hauptanspruchs, vorteilhafte Weiterbildungen sind in den Unteransprüchen gekennzeichnet. Hinsichtlich der Anordnung wird die Aufgabe gelöst durch die Merkmale des Anspruchs 14.

Bei der Lösung der Aufgabe wurde von der Überlegung ausgegangen, dass Akkomodations,- Fixations- und Adaptionsvorgänge nur dann vermieden werden können, wenn die aktuelle Fokussierebene des Fahrerauges bekannt ist. Unter Fokussierebene soll dabei die Fläche verstanden werden, auf der die Summe aller Punkte liegt, deren Entfernung zum Fahrerauge der Entfernung des jeweils vom Fahrer fixierten Punktes also der Entfernung seines Fokus entspricht. Da eine messtechnische Erfassung außerordentlich schwierig, störanfällig und teuer ist, wird deshalb vorgeschlagen, die wahrscheinliche aktuelle Fokussierebene anhand einer Situationsanalyse zu ermitteln und dies als Steuergröße für eine Projektionseinrichtung zu verwenden. Dabei ist eine Projektionseinrichtung vorgesehen, deren Projektionsabstand und/ oder Projektionsgröße und/ oder Projektionsposition dynamisch veränderbar ist, derart, dass das vom Fahrer wahrgenommene virtuelle Bild der dargestellten Information in einem dynamisch veränderlichen virtuellen Abstand relativ zur Position des Fahrerauges und/ oder einer dynamisch veränderlichen Größe und/ oder in einer dynamisch veränderlichen Position im Gesichtsfeld des Fahrers erscheint. Die Festlegung des jeweils situationsbezogen als ideal zu betrachtenden virtuellen Abstandes, der Position und der Größe ist dabei auf eine mittels einer Situationsanalyseeinrichtung durchgeführten Situationserkennung gestützt, bei der Fahrzeugdaten, Fahrzeugumfelddaten und Fahrerdaten zur Festlegung von Projektionsabstand und/ oder Projektionsposition und/ oder Projektionsgröße berücksichtigt werden. Zur Gewinnung der Fahrzeugdaten bietet es sich an, auf die im Fahrzeugrechner vorhandenen Informationen, zur Gewinnung der Fahrzeugumfelddaten auf eine Sensorik und/ oder auf ein Navigationssystem und/ oder auf Kommunikationsverbindungen und zur Gewinnung der Fahrerdaten auf eine Fahrererkennung und/ oder einer Augenpositionserkennung zurückzugreifen. Die Situationsanalyseeinrichtung ermittelt dazu aus den Fahrzeugdaten, Fahrzeugumfelddaten und Fahrerdaten die darstellungsbestimmenden Kriterien, es wird also aus der Situationsanalyse eine wahrscheinliche aktuelle Fokussierebene bestimmt und diese in einen Projektionsabstand und/ oder eine Projektionsposition und/ oder eine Projektionsgröße überführt. Daraus lassen sich dann Ansteuerinformation für die Projektionseinrichtung gewinnen. Diese, entsprechend angesteuert, stellt virtuelle Bildinhalte vorteilhaft so dar, dass erforderliche Akkomodations-, Fixations- und Adaptionszeiten des Fahrerauges minimiert und sicherheitskritische Verdeckungen der realen Umgebung verhindert werden.

Wie oben ausgeführt werden Fahrzeugdaten vorteilhaft für die Situationsanalyse als Eingangsinformation verwendet. Hier geben zum Beispiel die Eigengeschwindigkeit des Fahrzeugs, dessen Blinkerzustand, der Lenkwinkel und die Navigationsinformationen wichtige Hinweise auf die wahrscheinliche Fokussierebene des Fahrers. Eine niedrige Eigengeschwindigkeit lässt auf einen eher nahen Fokus, eine hohe Eigengeschwindigkeit auf einen eher fernen Fokus schließen. Ein eingeschalteter Blinker gibt ebenfalls Hinweise auf die wahrscheinliche Fokussierebene, ebenso wie der Lenkwinkel und die Navigationsinformation. Besonders aussagekräftig sind Kombinationen solcher Eingangsinformationen sowie die Betrachtung deren zeitlicher Veränderung. So kann aus einer sich verringernden Eigengeschwindigkeit, einem aus den Navigationsdaten entnommenen bevorstehenden Abbiegevorgang von der aktuell befahrenen Straße auf eine andere und einem hierzu entsprechenden Lenkwinkel relativ sicher geschlossen werden, dass der Fahrer den Ort des Abbiegens fixiert, wobei diesem Ort aus dem Navigationssystem eine Entfernungsinformation zugeordnet werden kann.

Neben den Fahrzeugdaten eignen sich Fahrzeugumfelddaten besonders vorteilhaft zur Situationsanalyse. Wichtige den augenblicklichen Fokus beeinflussende Größen, die je nach ihrer augenblicklich gegebenen Kombination auf eine wahrscheinliche aktuelle Fokussierebene schließen lassen, sind zum Beispiel Tageszeit, Jahreszeit, Abstand zum vorausfahrenden Fahrzeug, geometrische Dimensionen des vorausfahrenden Fahrzeugs, Position und Art weiterer Verkehrsteilnehmer, Verkehrsdichte, Merkmale der Verkehrs-Infrastruktur (Ampeln, Verkehrsschilder etc.), Straßentyp, Straßenbeschaffenheit, erlaubte Geschwindigkeit und Wetterverhältnisse.

Auch die Fahrerdaten haben einen nicht unerheblichen Einfluss auf die Ermittlung der wahrscheinlichen Fokussierebene. Hier ist es für die Situationsanalyse wichtig, physische Eigenschaften des Fahrers, wie zum Beispiel dessen Sehvermögen, das Verwenden einer Sehhilfe und die Augenposition relativ zum Combiner zu kennen, aber auch momentane Eigenschaften, wie zum Beispiel Müdigkeitsgrad oder momentane Beanspruchung des Fahrers sind für die Situationsanalyse und damit die Bestimmung der wahrscheinlichen aktuellen Fokussierebene wichtig.

Weiter lassen sich zur Situationsanalyse zusätzlich Vorausschaudaten vorteilhaft verwenden, dabei kann es sich beispielsweise um den weiteren Streckenverlauf, um besondere Hindernisse im Verkehr (Stau, Verkehrsunfall, Personen etc.) oder um Wetterprognosen (Glatteis, Regen, Nebel, etc.) handeln.

Zur Gewinnung der Fahrzeugdaten bieten sich vorteilhaft das Auslesen aus einem Fahrzeugrechner und/ oder das Auslesen von Sensordaten aus Fahrzeugzustandssensoren an. Moderne Fahrzeuge verfügen üblicherweise über einen Fahrzeugrechner, der aus zumeist mehreren Komponenten besteht, die über ein Bussystem, zumeist ist dies ein sogenannter CAN-Bus, verbunden sind und über diesen Daten austauschen. An diesem Bussystem werden auch Sensoren, bzw. mit Sensoren ausgerüstete Subsysteme betrieben, so dass alle im Fahrzeug anfallenden Informationen für die Situationsanalyse prinzipiell verfügbar sind. Hierzu gehören auch bestimmte Fahrzeugumfelddaten, die unter Nutzung von Fahrzeugumfeldsensoren (zum Beispiel radar-, lidar-, ultraschall- oder kameragestützte Sensorsysteme) gewonnen werden.

Für die Gewinnung von Fahrzeugumfelddaten, die zur Situationsanalyse nutzbar sind, lassen sich aber auch andere Techniken vorteilhaft einsetzen. So können zum Beispiel mittels Fahrzeug zu Fahrzeug Kommunikation und/ oder Fahrzeug zu Infrastruktur Kommunikation und/ oder die Nutzung digitaler Landkarten in Verbindung mit einem GPS-System und/ oder die Nutzung von Verkehrsinformationen und/ oder die Nutzung von Wetterinformationen wichtige Hinweise gewonnen werden, wo die wahrscheinliche Fokussierebene des Fahrers angenommen werden kann.

Um Fahrerdaten zu gewinnen und zur Situationsanalyse zu verwenden, bieten sich vorteilhaft eine Reihe von Techniken an. Durch das Auslesen aus einem dem Fahrer zugeordneten Speichermedium lassen sich vorteilhaft physische Eigenschaften des Fahrers gewinnen, die bei der Situationsanalyse zu berücksichtigen sind. Eine weitere ebenfalls vorteilhafte Vorgehensweise solche fahrerbezogenen physischen Daten zugänglich zu machen besteht darin, durch Identitätserkennung zum Beispiel mittels Fingerabdrucksensor oder Retinaabtastung oder Stimmenanalyse die Identität des Fahrers zu ermitteln und damit aus einem Speicher persönliche Eigenschaften zuzuordnen. Natürlich können auch messtechnische Verfahren vorteilhaft eingesetzt werden, um individuelle körperbezogene Größen mittels Sensoren und/ oder Kameras und Interpretation der gemessenen Größen in einer Analyseeinheit zu ermitteln. Eine weitere vorteilhafte Möglichkeit für die Situationsanalyse wichtige Informationen zu erhalten besteht darin, die Fahrweise des Fahrers zum Beispiel durch Auswerten der Pedalaktivität und/ oder Lenkaktivität zu analysieren. So lassen sich unter anderem auch Informationen über die augenblickliche Beanspruchung des Fahrers oder seinen Müdigkeitsgrad gewinnen.

Beim erfindungsgemäßen Verfahren wird erfindungsgemäß als ein erstes wesentliches, die virtuelle Projektionsentfernung bestimmendes Kriterium der wahrscheinliche augenblickliche Fokus des Fahrers durch die Situationsanalyseeinrichtung bestimmt. Dazu wird vorteilhaft wenigstens die Augenposition des Fahrers relativ zum Combiner, die Art der aktuell befahrenen Fahrstrecke, das Vorhandensein eines vorausfahrenden Fahrzeugs und gegebenenfalls dessen Entfernung herangezogen. Um die Augenposition des Fahrers relativ zum Combiner zu ermitteln kann, wie bereits erwähnt, die Größe des Fahrers aus einem Speicher ausgelesen werden. Diese Vorgehensweise ist allerdings sehr ungenau, es bietet sich daher an, die Ermittlung der Augenposition messtechnisch vorzunehmen, indem zum Beispiel das Bild einer den Fahrerarbeitsplatz überwachenden Kamera auf die Augenposition hin analysiert wird. Derartige Verfahren sind bekannt und bedürfen keiner näheren Erläuterung. Die Ermittlung der Augenposition ist deshalb wichtig, weil auch die Entfernung der Augen vom Combiner mitbestimmt, in welcher virtuellen Entfernung die Darstellung der mittels der Projektionseinrichtung eingespiegelten Informationen dem Fahrer erscheint. Als weitere Informationen liefert die Art der aktuell befahrenen Fahrstrecke Hinweise auf die wahrscheinlich anzunehmende Fokussierebene des Fahrers. So ist bei einer aktuell befahrenen Schnellstraße oder Autobahn eine weiter entfernt liegende Fokussierebene anzunehmen, als bei einer befahrenen Innenstadtstraße. Die Art der befahrenen Straße lässt sich vorteilhaft aus digitalen Karten in Verbindung mit einem GPS- System ermitteln, wie sie in einem Navigationssystem zur Verfügung stehen. Ein wesentliches, die wahrscheinliche Fokussierebene bestimmendes Kriterium ist das Vorhandensein eines vorausfahrenden Fahrzeugs. Hier kann vorteilhaft das in modernen Fahrzeugen ohnehin vorhandene Abstandsradar eingesetzt werden, mit dessen Hilfe die Entfernung zu vorausfahrenden Fahrzeugen vermessen wird. Das Vorhandensein eines vorausfahrenden Fahrzeugs lässt mit hoher Wahrscheinlichkeit darauf schließen, dass die Fokussierebene des Fahrers in der Entfernung des vorausfahrenden Fahrzeugs liegt.

Als weiteres wesentliches, den virtuellen Projektionsabstand, die Projektionsposition und Projektionsgröße bestimmendes erfindungsgemäßes Kriterium analysiert die Situationsanalyseeinrichtung, ob sich im Gesichtsfeld des Fahrers kritische Bereiche befinden, die durch eine Projektion nicht verdeckt werden dürfen. Hierzu kann zum Beispiel vorteilhaft eine Kamera vorgesehen sein, deren an die Situationsanalyseeinrichtung geliefertes Bild auf kritische Bildinhalte, wie zum Beispiel Ampeln, Verkehrszeichen, Kreuzungen, abbiegende bzw. einmündende Straßen, Personen oder Gegenstände auf der Fahrbahn usw. hin untersucht wird. Dazu kann sich die Situationsanalyseeinrichtung vorteilhaft auch weiterer Daten bedienen, die ihr zum Beispiel von einer Abtasteinheit für das Nahumfeld des Fahrzeug, einem Navigationssystem mit digitaler Karte in Verbindung mit einem Satelliten gestützten Positionsbestimmungssystem, einer Fahrzeug zu Fahrzeug Kommunikationseinheit, einer Fahrzeug zu Infrastruktur Kommunikationseinheit usw. verfügbar gemacht werden.

Sind das erste Kriterium, also die wahrscheinliche Fokussierebene des Fahrers und das weitere Kriterium, also im Gesichtsfeld des Fahrers befindliche kritische Bereiche, die durch eine Anzeige nicht verdeckt werden dürfen, bekannt, kann die Situationsanalyseeinrichtung mit Hilfe des ersten Kriteriums und/ oder des weiteren Kriteriums Projektionsabstand, Projektionsposition und Projektionsgröße vorteilhaft festlegen, derart, dass eine Anpassung an den wahrscheinlichen augenblicklichen Fokus des Fahrers vorgenommen wird, so dass erforderliche Akkomodations-, Fixations- und Adaptionszeiten des Fahrerauges minimiert und sicherheitskritische Bereiche der realen Umgebung nicht verdeckt werden. Die so gewonnenen, für die Darstellung entscheidenden Größen Projektionsabstand, Projektionsposition und Projektionsgröße übermittelt die Situationsanalyseeinrichtung in Form von Steuerdaten an die den Projektionsabstand, die Projektionsposition und die Projektionsgröße einstellende Projektionseinrichtung als Eingangsdaten.

Weiterhin vorteilhaft ist es, wenn neben dem wahrscheinlichen augenblicklichen Fokus des Fahrers mittels der Situationsanalyseeinrichtung ein wahrscheinlicher zukünftiger Fokus ermittelt wird. Auf diese Weise wird es vorteilhaft möglich, die Anpassung des Projektionsabstandes, der Projektionsposition und Projektionsgröße auf diesen zukünftigen Projektionsabstand, diese zukünftige Projektionsposition und Projektionsgröße, durch die Situationsanalyseeinrichtung mittels entsprechender Ansteuerung der Projektionseinrichtung gleitend vorzunehmen, ohne dass es zu einer sprunghaften Veränderung der Darstellung auf dem Combiner kommt. Für die Bestimmung des wahrscheinlichen zukünftigen Fokus verwendet die Situationsanalyseeinrichtung vorteilhaft die Tendenz der Geschwindigkeit des Fahrzeugs und gegebenenfalls die Tendenz der Entfernung eines vorausfahrenden Fahrzeugs. Es ist natürlich möglich auch weitere Größen zur Ermittlung der wahrscheinlichen zukünftigen Fokussierebene heranzuziehen, wie sie weiter oben bereits in Verbindung mit der Ermittlung der wahrscheinlichen aktuellen Fokussierebene angesprochen sind, wie zum Beispiel Streckenverlauf und/ oder besondere Hindernisse im Verkehr und/ oder Wetterdaten, um nur einige beispielhaft zu nennen.

Wie bereits weiter oben angesprochen, wird zur Anzeige von optischen Informationen in Fahrzeugen im zentralen Sichtfeld des Fahrers ein teilreflektierender Combiner verwendet, der als Reflektor für eine Projektionseinrichtung dient. Der Combiner kann dabei von der Windschutzscheibe des Fahrzeugs gebildet werden, wenn diese eine geeignete Neigung für die Reflexion zum Fahrerauge aufweist. Die Projektionseinrichtung projiziert alphanumerische Informationen und/ oder Bildinhalte auf den Combiner derart, dass sich eine Überlagerung der alphanumerischen Informationen und/ oder Bildinhalte (virtuelles Bild) mit der realen Verkehrsumgebung ergibt. Erfindungsgemäß ist die Projektionseinrichtung vorteilhaft so ausgebildet, dass deren Projektionsabstand und/ oder Projektionsposition und/ oder Projektionsgröße dynamisch veränderbar ist, derart, dass das vom Fahrer wahrgenommene virtuelle Bild in einem dynamisch veränderlichen virtuellen Abstand relativ zur Position der Augen und/ oder einer dynamisch veränderlichen Position im Gesichtsfeld des Fahrers und/ oder in einer dynamisch veränderlichen Größe dargestellt wird. Hierzu ist eine Situationsanalyseeinrichtung vorgesehen, die bezogen auf die Verkehrssituation den wahrscheinlichen Fokus des Fahrers und damit die Fokussierebene ermittelt. Die Situationsanalyseeinrichtung verwendet hierzu Fahrzeugdaten, Fahrzeugumfelddaten und Fahrerdaten und setzt diese in einen Projektionsabstand und/ oder eine Projektionsposition und/ oder eine Projektionsgröße um. Zu diesem Zweck ist die Situationsanalyseeinrichtung mit einem Fahrzeugrechner und/ oder einer Sensorik und/ oder einem Navigationssystem und/ oder Kommunikationsverbindungen und/ oder einer Fahrererkennungseinrichtung und/ oder einer Augenpositionserkennungseinrichtung wirkverbunden und ermittelt aus den von dort bezogenen Informationen den wahrscheinlichen Fokus des Fahrers und damit die wahrscheinliche Fokussierebene. Ist die wahrscheinliche Fokussierebene bekannt und wurden die Bereiche im Gesichtsfeld des Fahrers identifiziert, die durch eine Darstellung projizierter Inhalte nicht verdeckt werden dürfen, legt die Situationsanalyseeinrichtung einen Projektionsabstand und/ oder eine Projektionsposition und/ oder eine Projektionsgröße fest und steuert über eine Wirkverbindung die Projektionseinrichtung damit an, so dass erforderliche Akkomodations-, Fixations- und Adaptionszeiten des Fahrerauges minimiert und sicherheitskritische Verdeckungen der realen Umgebung verhindert werden.

Vorteilhaft eingesetzt werden kann das erfindungsgemäße Verfahren bzw. die erfindungsgemäße Anordnung in Fahrzeugen insbesondere Nutzfahrzeugen bevorzugt in Kraftfahrzeugen.

Weitere Ausgestaltungen und Vorteile der Erfindung werden nachfolgend anhand der Zeichnungen näher erläutert, es zeigen:
- Fig. 1: ein Head-Up-Display in Prinzipdarstellung
- Fig. 2: ein Teil einer Kraftfahrzeugsteuerung in Prinzipdarstellung
- Fig. 3a: eine erste Verkehrssituation
- Fig. 3b: eine zweite Verkehrssituation
- Fig. 3c: eine dritte Verkehrssituation

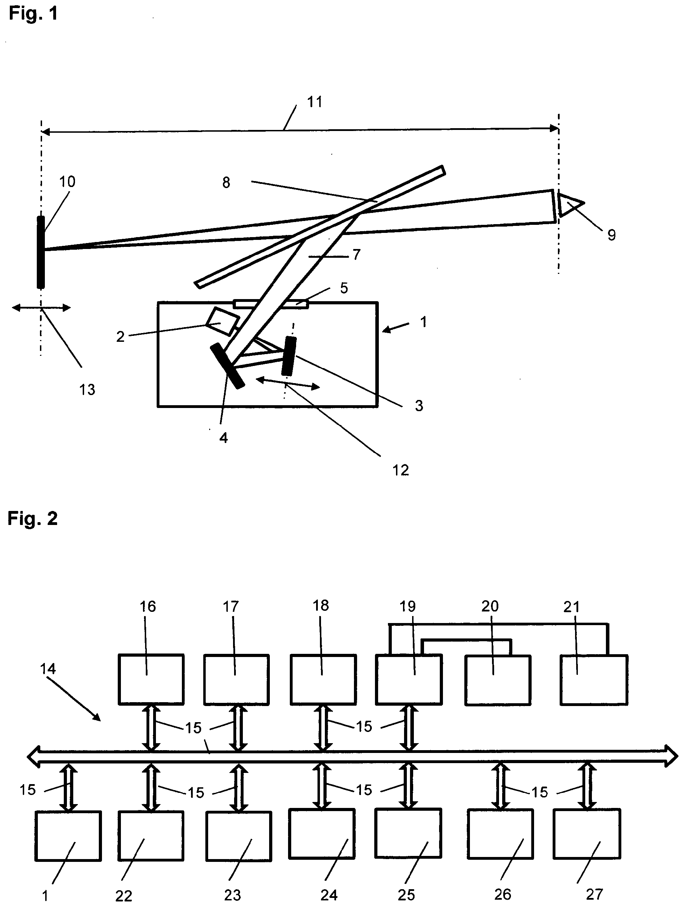

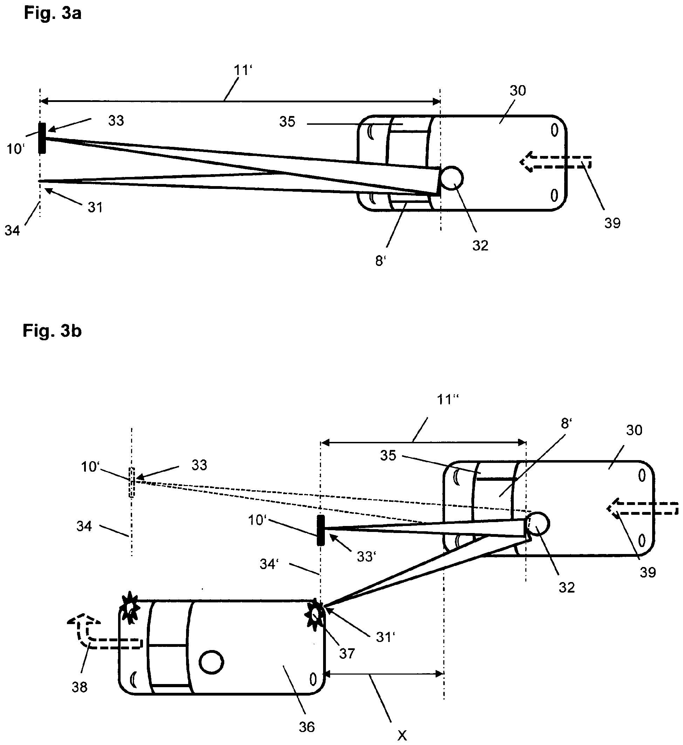

Ein Head-Up-Display, wie es in Fig. 1 schematisch dargestellt ist, weist eine Projektionseinrichtung 1 auf, die über einen Bildgeber 2 das darzustellende Bild in Form einer alphanumerischen und/ oder graphischen Darstellung erzeugt und über einen ersten Spiegel 3 und einen zweiten Spiegel 4 umgelenkt, durch eine transparente Abdeckung 5 der Projektionseinrichtung 1 hindurch entlang des Projektionsstrahlengangs 7 auf einen Combiner 8 projiziert. Der Combiner 8 ist teilreflektierend derart, dass die auf ihn projizierten alphanumerischen und/ oder graphischen Darstellungen in Richtung Fahrerauge 9 reflektiert werden und teiltransparent in der Weise, dass die auf der dem Fahrerauge abgewandten Seite des Combiners 8 befindliche reale Szenerie für das Fahrerauge 9 normal sichtbar ist. Wie bereits oben erwähnt, kann es sich bei dem Combiner 8, einen entsprechenden Neigungswinkel vorausgesetzt, auch um die Windschutzscheibe 35 (Fig. 3a bis 3c) handeln. Die auf den Combiner 8 projizierten alphanumerischen und/ oder graphischen Darstellungen erscheinen nun dem Fahrerauge 9 gemäß den Abbildungsgesetzen der Optik als virtuelles Bild 10 beabstandet zum Combiner 8 auf dessen dem Fahrerauge 9 abgewandten Seite in einem virtuellen Abstand 11. Der virtuelle Abstand 11 wird dabei bestimmt durch die Länge des Projektionsstrahlengangs 7 und die Entfernung zwischen dem Darstellungsort auf dem Combiner 8 und dem Fahrerauge 9. Während die Entfernung zwischen dem Darstellungsort auf dem Combiner 8 und dem Fahrerauge 9 für einen jeweils bestimmten Fahrer weitgehend als konstant angenommen werden kann, besteht die Möglichkeit durch Änderung des Projektionsstrahlenganges 7 durch Verlängern oder Verkürzen auch den virtuellen Abstand 11 zu verändern. In Fig. 1 ist dies dadurch angedeutet, dass der erste Spiegel 3 entlang der durch den Pfeil 12 angedeuteten Bahn linear verschiebbar angeordnet ist. Wird der Projektionsstrahlengang 7 durch Verschieben des ersten Spiegels 3 in der Darstellung nach rechts verlängert, verschiebt sich das virtuelle Bild 10 wie durch den Richtungspfeil 13 angedeutet in der Darstellung nach links. Eine Verlängerung des Projektionsstrahlengangs 7 hat also zur Folge, dass sich der virtuelle Abstand 11 ebenfalls vergrößert, verkürzt sich hingegen der Projektionsstrahlengang 7, verkürzt sich auch der virtuelle Abstand 11. Weiter lässt sich natürlich auch der Ort der Darstellung auf dem Combiner 8 beeinflussen, indem zum Beispiel der zweite Spiegel 4 horizontal und/ oder vertikal schwenkbar ist (in Fig. 1 nicht dargestellt). Entsprechend wandert also das auf den Combiner projizierte Bild nach den Gesetzen der Reflexion beim Verschwenken um eine Drehachse senkrecht zur Darstellungsebene in der Darstellung nach Fig. 1 nach rechts oben oder links unten, bzw. beim Verschwenken um eine Drehachse in der Darstellungsebene aus der Darstellungsebene heraus oder in diese hinein. Das Verschieben des ersten Spiegels 3 und das Verschwenken des zweiten Spiegels 4 lässt sich zum Beispiel elektromotorisch bewerkstelligen, indem entsprechende elektromotorische Antriebe für die Spiegel 3, 4 vorgesehen sind, die entsprechend des gewünschten virtuellen Abstandes 11 bzw. entsprechend dem gewünschten Darstellungsort auf dem Combiner 7 angesteuert werden. Die Größe des dargestellten virtuellen Bildes lässt sich durch den Bildgeber 2 direkt festlegen. Selbstverständlich können die Funktionen des ersten Spiegels 3 und des Zweiten Spiegels 4 auch vertauscht sein.

Hinsichtlich der Prinzipdarstellung nach Fig. 1 ist darauf hinzuweisen, dass der Strahlengang in der Projektionseinrichtung beliebig komplex sein kann, so ist es insbesondere möglich, für eine geeignete Abbildung auf dem Combiner 8 zusätzliche plane oder gekrümmte Spiegel, Linsen und andere optische Elemente einzusetzen. Gleichfalls ist es möglich, durch Herausschwenken oder Einschwenken optischer Elemente in den Projektionsstrahlengang 7 den virtuellen Abstand 11 sowie den Darstellungsort auf dem Combiner 8 zu beeinflussen. Nachdem sich der Combiner 8 im Strahlengang der Projektionseinrichtung befindet, lässt sich natürlich der virtuelle Abstand 11 sowie der Darstellungsort und die Größe der Darstellung auf dem Combiner 8, auch durch Verstellen des Combiner 8 selbst beeinflussen.

Ein Head-UP-Display des vorstehend beschriebenen Typs als vorhanden vorausgesetzt, soll nun eine Kraftfahrzeugsteuerung heute üblicher Kraftfahrzeuge kurz dargestellt werden, soweit es für das Verständnis des erfindungsgemäßen Verfahrens bzw. der Anordnung notwendig erscheint. Hierzu ist in Fig. 2 stark vereinfacht und schematisch ein Teil einer Fahrzeugsteuerung 14 gezeigt, die durch ein CAN-Bussystem gebildet ist, das in der Darstellung gemäß Fig. 2 nur durch Wirkverbindungen 15 symbolisch dargestellt ist. Derartige CAN-Bussysteme bestehen aus mehreren Steuerkomponenten, die über eigene Prozessorleistung verfügen, also als selbstständige Recheneinheiten anzusehen sind. Verbunden sind diese Steuerkomponenten über CAN-Bussystem-Verbindungen entweder direkt oder über sogenannte "Gateway und Diagnoseinterfaceeinheiten", die die Aufgabe haben, unterschiedlich schnelle Teilbussysteme so zu verbinden, dass global benötigte Informationen allen Steuerkomponenten zur Verfügung stehen. Derartige CAN-Bussystem sind weit verbreitet, so dass sich eine detaillierte Beschreibung der Busprotokolle und Datenaustauschmechanismen erübrigt. Da sich CAN-Bussysteme in der Hardware sehr stark unterscheiden können sind in Fig. 2 lediglich Wirkkomponenten und Wirkverbindungen dargestellt, wobei die Wirkkomponenten sowohl Hardwarekomponenten als auch Softwarekomponenten sein können oder Mischungen aus beiden Kategorien. Bei den dargestellten Verbindungen handelt es sich, wie bereits erwähnt, um reine Wirkverbindungen. Aus Gründen der Übersichtlichkeit wurde auf die Darstellung von Gateways und ähnlicher Komponenten, die der reinen Bussteuerung dienen, verzichtet.

An dem CAN-Bussystem, symbolisiert durch die Wirkverbindungen 15, werden eine Situationsanalyseeinrichtung 16 und als Wirkkomponenten, ein Abstandsradar 17, eine Nahumgebungssensorik 18, ein Navigationssystem 19 mit digitaler Landkarte 20 und satellitengestützter Positionsbestimmung (GPS) 21, eine Frontkamera 22, eine Fahreridentifikationseinheit 23, eine Fahrerbeobachtungssensorik 24, eine Fahrzeug-zu-Fahrzeug-Kommunikationseinrichtung 25, eine Infrastruktur-zu-Fahrzeug-Kommunikationseinrichtung 26 und ein Fahrzeugrechner 27 betrieben. Unter dem letztgenannten soll die Steuereinheit mit Subsystemen verstanden werden, die alle fahrzeuginternen Vorgänge steuert und alle diesbezüglichen Informationen vorhält. Als durch die Situationsanalyseeinrichtung 16 gesteuerte Komponente ist die Projektionseinrichtung 1 eines Head-Up-Displays (Fig. 1) vorgesehen. Die Wirkkomponenten 17 bis 27 sind dabei so ausgebildet, dass sie über die Wirkverbindungen 15 gegenseitig Informationen austauschen können, dabei ist insbesondere vorgesehen, dass die Situationsanalyseeinrichtung 16 von allen übrigen Wirkkomponenten Informationen bezieht und zueinander in Beziehung setzt. Dass die Wirkkomponenten 17 bis 27 je nach ihrer Bestimmung mit Sensoren ausgerüstet bzw. verbunden sind versteht sich von selbst. Die vorstehend aufgeführten informationsgebenden Wirkkomponenten 17 bis 27 sind nur beispielhaft genannt, es können mehr oder auch weniger solcher Wirkkomponenten vorhanden sein, abhängig davon, welche Auswertekriterien in der Situationsanalyseeinrichtung 16 vorgesehen sind. Um nun eine Situationsanalyse vornehmen zu können, fragt die Situationsanalyseeinrichtung 16 aus den Wirkkomponenten 17 bis 27 für die Auswertekriterien relevante Informationen zyklisch ab und setzt sie zueinander und zu in der Situationsanalyseeinrichtung 16 gespeicherten Informationen in Beziehung.

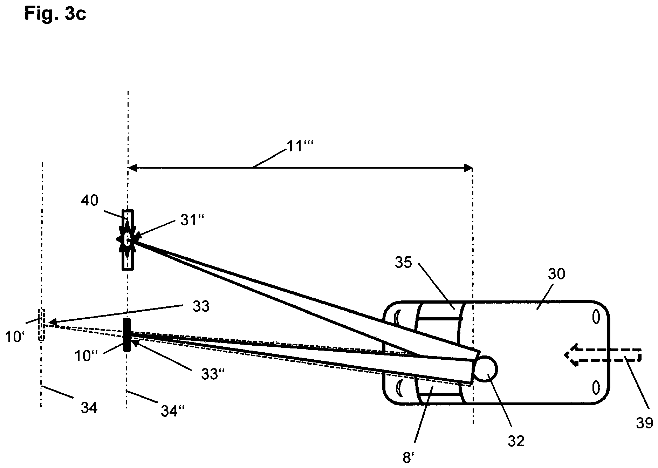

Zur näheren Erläuterung der Wirkungsweise des erfindungsgemäßen Verfahrens, wird nachfolgend in Verbindung mit dem Vorstehenden auf die Darstellungen in Fig. 3a, Fig. 3b und Fig. 3c Bezug genommen.

In Fig. 3a ist ein erstes Fahrzeug 30 dargestellt, das auf freier Strecke fährt. In einer solchen Situation wird sich der Fokus 31 des Fahrerauges 9 (Fig.1) auf eine Entfernung einstellen, die von der Art der befahrenen Straße und der Fahrzeuggeschwindigkeit abhängt. Um nun einen geeigneten virtuellen Abstand 11 für die Darstellung des virtuellen Bildes 10 (Fig. 1) zu bestimmen, selektiert die Situationsanalyseeinrichtung 16 (Fig. 2), die ja den Fokus des Fahrers nicht kennt, aus der Gesamtheit der ihr zur Verfügung stehenden Informationen die für den Fokus des Fahrers bestimmenden. Dies sind für die angesprochene Situation die Identität des Fahrers und dessen physische Gegebenheiten, die in der Fahreridentifikationseinheit 23 zur Verfügung stehen, die Art der befahrenen Straße, die aus dem Navigationssystem 19 (unter Zuhilfenahme des GPS 21 und der digitalen Landkarte 20) stammt und die gefahrene Geschwindigkeit die im Fahrzeugrechner 27 verfügbar ist. Zur Ermittlung der wahrscheinlichen Fokussierentfernung des Fahrers setzt die Situationsanalyseeinrichtung 16 die vorstehend genannten Informationen zueinander und zu in der Situationsanalyseeinrichtung 16 gespeicherten Informationen in Beziehung. Handelt es sich bei der Art der befahrenen Straße zum Beispiel um eine Autobahn und ist die gefahrene Geschwindigkeit hoch, ist ein weit nach vorne gerichteter Fokus 31 des Fahrers 32 anzunehmen. In einem solchen Fall wird ein relativ großer virtueller Abstand 11' für die wahrscheinliche Fokussierebene 34 des Fahrers angenommen und dieser virtuelle Abstand 11' für das darzustellende virtuelle Bild 10' vorgesehen, dabei werden die physischen Gegebenheiten des Fahrers 32, zum Beispiel seine im Wesentlichen durch seine Größe und die Stellung des Fahrersitzes bestimmte Augenposition, durch die Situationsanalyseeinrichtung 16 mit einbezogen. Die Größe des Fahrers 32 ergibt sich aus der Fahreridentifikation mittels der Fahreridentifikationseinheit 23 und den dem jeweiligen Fahrer 32 speichertechnisch zugeordneten physischen Attributen (Größe). Die Sitzposition ist aus dem Fahrzeugrechner 27 abrufbar, der bei der heute gebräuchlichen elektronischen Sitzverstellung die Information über die Sitzposition vorhält. Selbstverständlich besteht auch alternativ die Möglichkeit, die Augenposition des Fahrers 32 messtechnisch zu erfassen, hierzu kann auf die Fahrerbeobachtungssensorik 24 zurückgegriffen werden, die zum Beispiel mit einer Fahrerkamera und einer angeschlossenen Bildanalyse sowie einer Entfernungsmessung die Augenposition des Fahrers 32 relativ zum Combiner 8' bestimmen kann.

Um den in der Situationsanalyse gewonnenen virtuellen Abstand 11' einzustellen, steuert die Situationsanalyseeinrichtung 16 die Projektionseinrichtung 1 (Fig. 1 und Fig. 2) so an, dass sich durch die Veränderung der Länge des Projektionsstrahlengangs 7 (Fig. 1) der gewünschte virtuelle Abstand 11' einstellt. Schaut der Fahrer nach erfolgter Einstellung des virtuellen Abstandes 11' auf das Bild 10' tritt keine Änderung der Fokussierebene 34 ein, der Fokus 31 entspricht also in der Fokussierentfernung dem Fokus für das virtuelle Bild 33.

Da die Situationsanalyseeinrichtung 16 die Situation in der sich der Fahrer befindet zyklisch analysiert, werden Situationswechsel identifiziert und in die Darstellung des virtuellen Bildes umgesetzt. Ein solcher Situationswechsel ist in Fig. 3b gezeigt. Hierzu ist angenommen, dass sich dem ersten Fahrzeug 30 aus dem Beispiel nach Fig. 3a von hinten auf der Überholspur ein zweites Fahrzeug 36 angenähert hat und das erste Fahrzeug 30 überholt. Weiter ist angenommen, dass das zweite Fahrzeug 36 beabsichtigt vor dem ersten Fahrzeug 30 von der Überholspur auf die Spur des ersten Fahrzeugs 30 zu wechseln, um den Überholvorgang abzuschließen, was das zweite Fahrzeug 36 durch Blinkzeichen mit dem Blinker 37 anzeigt.

In der beschriebenen Situation wird sich die Aufmerksamkeit des Fahrers 32 von der Fokussierebene 34 (Fig. 3a) auf eine neue Fokussierebene 34' verlagern, die an der Rückseite des zweiten Fahrzeugs 36 angenommen werden kann, wenn dieses am erste Fahrzeug 30 vorbeigefahren ist und den Blinker 37 gesetzt hat. Das bedeutet, dass der virtuelle Abstand 11' des dargestellten virtuellen Bildes 10' gemäß Fig. 3a (in Fig. 3b gestrichelt dargestellt) nicht mehr mit der Fokussierentfernung des Fahrers gemäß Fig. 3b übereinstimmt. Um diese Diskrepanz zu vermeiden, läuft gemäß dem erfindungsgemäßen Verfahrens mit Hilfe der Situationsanalyseeinrichtung 16 folgendes ab:
Aus der von dem Abstandsradar 17 gewonnenen Information "Fahrzeug vorne links im Abstand X" steht der Situationsanalyseeinrichtung 16 ein neues Kriterium für die Auswertung zur Verfügung, das zunächst alleine kein eindeutiges Indiz für einen wahrscheinlichen Fokuswechsel des Fahrers 32 liefert. Erst die Tatsache, dass das vorausfahrende zweite Fahrzeug den Blinker gesetzt hat und in die Richtung des Fahrtrichtungspfeiles 38 einscheren will, was die Situationsanalyseeinrichtung 16 zum Beispiel durch die Abfrage einer Frontkamera 22 mit enthaltener Bildauswertung detektiert oder über die Abfrage einer Fahrzeug-zu-Fahrzeug-Kommunikationseinrichtung 25, macht eine Änderung der Fokussierebene des Fahrers 32 wahrscheinlich. Die neue Fokussierebene wird mit hoher Wahrscheinlichkeit mit der Rückseite des zweiten Fahrzeugs 36 übereinstimmen. Da der Abstand X des zweiten Fahrzeugs 36 vom ersten Fahrzeug 30 durch das Abstandsradar 17 bekannt ist, lässt sich daraus der neue virtuelle Abstand 11" für die Darstellung des virtuellen Bildes 10' bestimmen.

Um den in der Analyse der neuen Situation gewonnenen neuen virtuellen Abstand 11" einzustellen, steuert die Situationsanalyseeinrichtung 16 die Projektionseinrichtung 1 (Fig. 1 und Fig. 2) so an, dass sich durch langsames Verändern der Länge des Projektionsstrahlengangs 7 (Fig. 1) der gewünschte neue virtuelle Abstand 11" gleitend einstellt. Schaut der Fahrer nach erfolgter Einstellung des virtuellen Abstandes 11" auf das virtuelle Bild 10' tritt keine Änderung der Fokussierebene 34' ein, der Fokus 31' entspricht also in der Fokussierentfernung dem neuen Fokus für das virtuelle Bild 33'.

Zusätzlich zu der Anpassung der Fokussierebene ist in dem Beispiel nach Fig. 3b auch der Darstellungsort des virtuellen Bildes 10' einer Änderung unterzogen worden, derart, dass dieses in der Darstellung nach Fig. 3b nach unten verschoben wurde, also vom Fahrer aus gesehen nach links auf den wahrscheinlichen neuen Fokus 31' zu. Durch diese Maßnahme kann der Winkel zwischen dem wahrscheinlichen neuen Fokus 31' des Fahrers 32 und dem neuen Fokus für das virtuelle Bild 33', wenn der Fahrer 32 das virtuelle Bild 10' in den Blick nimmt, klein gehalten werden. Das virtuelle Bild 10' bleibt so immer im Blickfeld des Fahrers 32. Notwendigenfalls lässt sich auch die Projektionsgröße des virtuellen Bildes 10' durch entsprechende Ansteuerung des Bildgebers 2 (Fig. 1) mittels der Situationsanalyseeinrichtung 16 (Fig. 2) beeinflussen.

Selbstverständlich ist die Anpassung des virtuellen Abstandes des virtuellen Bildes 10' ein kontinuierlicher Vorgang, der auch fortgeführt wird, wenn der vorstehend beschriebene Überholvorgang abgeschlossen ist. In der dann vorliegenden Verkehrssituation, in der das zweite Fahrzeug 36 dem ersten Fahrzeug 30 mit zunehmendem Abstand voraus fährt, wird der Fokus des Fahrers 32 weiter am Heck des zweiten Fahrzeuges 36 anzunehmen sein. Hier kann nun die Tendenz der Entfernung der Fahrzeuge zueinander oder die Tendenz der Relativgeschwindigkeit der Fahrzeuge zueinander oder die Tendenz der Geschwindigkeit der Fahrzeuge selbst herangezogen werden, um einen zukünftigen Fokus zu ermitteln, an den der virtuelle Abstand des virtuellen Bildes anzupassen ist. Die Anpassung wird dabei gleitend vorgenommen indem die Situationsanalyseeinrichtung 16, die vorstehend angesprochenen Tendenzen unter Zuhilfenahme der oben angesprochenen Sensorik ermittelt, daraus eine Ansteuerinformation für die Projektionseinrichtung 1 errechnet und diese entsprechend ansteuert.

Eine dritte Verkehrssituation, die sich aus der in Fig. 3a gezeigten entwickeln kann, ist in Fig. 3c gezeigt. Das Fahrzeug 30 gemäß Fig. 3a nähert sich in Fig. 3c einem Hinweisschild 40 mit Blinklichtfunktion, das auf einen vorausliegenden Gefahrenpunkt hinweist. Ein solches besonders auffälliges Hinweisschild 40 wird mit besonders hoher Wahrscheinlichkeit die Aufmerksamkeit des Fahrers auf sich ziehen. Es ist also anzunehmen, dass dieser schon in relativ großer Entfernung auf das Hinweisschild 40 fokussieren würde, wenn dieses in Sicht kommt. Nun ist aber das virtuelle Bild 10' gemäß Fig. 3a in Fahrtrichtung 39 des Fahrzeugs 30 vom Fahrer 32 aus gesehen etwas nach rechts versetzt, so dass das Hinweisschild 40, in größerer Entfernung als in Fig. 3c gezeigt, durch das virtuelle Bild 10' verdeckt werden könnte. In dieser Verkehrssituation reagiert die Situationsanalyseeinrichtung 16 folgendermaßen: In der zyklischen Abfrage der in Fig. 2 gezeigten Wirkkomponenten 17 bis 27 erkennt die Situationsanalyseeinrichtung 16 eine Veränderung des durch die Bildanalyse der Frontkamera 22 analysierten Bildes und identifiziert das Blinkzeichen als Aufmerksamkeit erforderndes Element. Weiter wandelt die Situationsanalyseeinrichtung 16 die aus der Bildanalyse bekannte Position des Blinkzeichens in eine Blickrichtung ausgehend von der Augenposition des Fahrers um und vergleicht diese mit der Blickrichtung in der das virtuelle Bild 10' dem Fahrer erscheint. Besteht zumindest teilweise Übereinstimmung, wird das virtuelle Bild an einen anderen Ort des Combiners 8' an der Windschutzscheibe 35 des Fahrzeugs 30 verschoben oder unterdrückt. Der vorstehend beschriebene Sachverhalt geht der in der Abbildung nach Fig. 3c gezeigten Verkehrssituation voraus, ist also dort nicht zu sehen.

Ist die in Fig. 3c gezeigte Verkehrssituation gegeben, hat sich die Entfernung zum Hinweisschild 40 schon soweit verkürzt, dass die Fokussierentfernung des Fahrers beim Fixieren des Hinweisschildes 40 kleiner ist, als der ursprüngliche virtuelle Abstand 11' (Fig. 3a) und sie verkleinert sich kontinuierlich. Um nun eine zufriedenstellende Darstellung des virtuellen Bildes 10" zu erreichen muss der virtuelle Abstand 11''' in dem das virtuelle Bild 10" dem Fahrer 32 erscheint, dynamisch nachgeführt, das heißt verkürzt werden. Hierzu kann die Situationsanalyseeinrichtung 16 aus der gefahrenen Geschwindigkeit des Fahrzeugs 30, die aus dem Fahrzeugrechner 27 (Fig. 2) verfügbar ist und einer Entfernungsinformation, auf die nachfolgend noch eingegangen wird, ein Maß für die Verkürzung des Projektionsstrahlenganges 7 (Fig. 2) ermitteln und die Projektionseinrichtung 1 entsprechend ansteuern, so dass der virtuelle Abstand 11''' und der Abstand zwischen den Augen des Fahrers 32 und dem Hinweisschild 40 zu jedem Zeitpunkt in etwa gleich sind. Wechselt der Fahrer 32 vom Fokus 31" (Hinweisschild 40) auf den Fokus 33" (Virtuelles Bild 33") wird kein Akkommodieren erforderlich, weil die Fokussierebene 34" gleich bleibt. Die vorstehend angesprochene Entfernungsinformation, also die Distanz zwischen Hinweisschild 40 und Fahrer 32 lässt sich auf unterschiedliche Weise bestimmen. So kann vorgesehen sein, dass Hinweisschild 40 und Fahrzeug 30 mit einer Infrastruktur-zu-Fahrzeug-Kommunikationseinrichtung 26 (Fig. 2) ausgestattet sind und das Hinweisschild eine Information über seine geographische Position aussendet, die von der Situationsanalyseeinrichtung 16 mit Hilfe der eigenen Position aus dem Navigationssystem 19 (Fig. 2) in eine Entfernungsinformation umgerechnet werden kann. Alternativ besteht die Möglichkeit die Entfernungsinformation aus den vom Abstandsradar 17 gelieferten Daten zu ermitteln, oder durch Auswertung der von der Frontkamera 22 gelieferten Bilder abzuschätzen.

Nachdem anzunehmen ist, dass der Fahrer das Hinweisschild nur so lange fixiert, bis er dessen Bedeutung erfasst hat, kann eine Zeit vorgegeben sein, nach der die Situationsanalyseeinrichtung 16 den virtuellen Abstand durch entsprechendes Ansteuern der Projektionseinrichtung 1 wieder auf die ursprüngliche Fokussierebene 34 zurückstellt. Es ist aber abweichend zur vorstehend angesprochenen Vorgehensweise auch denkbar, die Bedeutung des Hinweisschildes 40 in die Festlegung für einen zukünftigen virtuellen Abstand des virtuellen Bildes mit einzubeziehen. Das kann dadurch geschehen, dass die Situationsanalyseeinrichtung 16 zum Beispiel unter Nutzung der Infrastruktur-zu-Fahrzeug-Kommunikationseinrichtung 26 oder des Navigationssystems 19 die Bedeutung des Hinweisschildes 40 ermittelt und in einen neuen virtuellen Abstand überführt. Wenn zum Beispiel das Hinweisschild 40 auf eine Fahrbahnverengung (nicht dargestellt) hinweist, die eine Strecke "S" entfernt ist, wird eine entsprechende Einstellung des Abstandes des virtuellen Bildes mittels der Situationsanalyseeinrichtung 16 vorgenommen, weil der wahrscheinliche zukünftige Fokus des Fahrers 32 dort angenommen werden kann. Da das Fahrzeug sich auf die Engstelle zu bewegt, verringert sich im Folgenden der virtuelle Abstand gesteuert durch die Situationsanalyseeinheit 16 bis das Fahrzeug die Engstelle erreicht hat.

Wie aus dem Vorstehenden ersichtlich, lassen sich unterschiedlichste Informationen, wie sie einleitend aufgezählt sind, mit Hilfe der Situationsanalyseeinrichtung auswerten, um zu einer möglichst großen Übereinstimmung zwischen dem als wahrscheinlich anzunehmenden Fokus des Fahrers und seinem tatsächlichen Fokus zu gelangen. Der vorstehenden beispielhaften Darlegung der Funktionsweise des erfindungsgemäßen Verfahrens kann daher nur Beispielcharakter zukommen.

### Bezugszeichenliste

- 1: Projektionseinrichtung
- 2: Bildgeber
- 3: erster Spiegel
- 4: zweiter Spiegel
- 5: transparente Abdeckung
- 7: Projektionsstrahlengang
- 8, 8': Combiner
- 9: Fahrerauge
- 10, 10', 10": virtuelles Bild
- 11, 11', 11", 11''': virtueller Abstand
- 12: Pfeil
- 13: Richtungspfeil
- 14: Fahrzeugsteuerung
- 15: Wirkverbindungen
- 16: Situationsanalyseeinrichtung
- 17: Abstandsradar
- 18: Nahumgebungssensorik
- 19: Navigationssystem
- 20: digitale Landkarte
- 21: Satellitengestütztes Positionsbestimmungssystem GPS
- 22: Frontkamera
- 23: Fahreridentifikationseinheit
- 24: Fahrerbeobachtungssensorik
- 25: Fahrzeug-zu-Fahrzeug-Kommunikationseinrichtung
- 26: Infrastruktur-zu-Fahrzeug-Kommunikationseinrichtung
- 27: Fahrzeugrechner
- 30: erstes Fahrzeug
- 31, 31', 31": Fokus des Fahrers
- 32: Fahrer
- 33, 33', 33": Fokus für das virtuelle Bild
- 34, 34', 34": Fokussierebene
- 35: Windschutzscheibe
- 36: zweites Fahrzeug
- 37: Blinker
- 38: Fahrtrichtungspfeil
- 39: Fahrtrichtung
- 40: Hinweisschild

## Patentansprüche

1. Verfahren zur Anzeige von optischen Informationen in Fahrzeugen im zentralen Sichtfeld des Fahrers derart, dass sich mittels eines Combiners (8, 8') eine Überlagerung dieser Anzeige, d.h. virtuelles Bild, mit der realen Verkehrsumgebung ergibt, wobei eine Projektionseinrichtung (1) vorgesehen ist, deren Projektionsabstand und/ oder Projektionsgröße und/ oder Projektionsposition dynamisch veränderbar ist, derart, dass das vom Fahrer (32) wahrgenommene virtuelle Bild (10, 10', 10") der dargestellten Information in einem dynamisch veränderlichen virtuellen Abstand (11, 11', 11", 11''') relativ zur Position des Fahrerauges (9) und/ oder einer dynamisch veränderlichen Position im Gesichtsfeld des Fahrers (32) und/ oder in einer dynamisch veränderlichen Projektionsgröße darstellbar ist, wobei die Festlegung des jeweils situationsbezogen als ideal zu betrachtenden virtuellen Abstandes (11, 11', 11", 11'''), der Position im Gesichtsfeld des Fahrers (32) und der Projektionsgröße auf eine mittels einer Situationsanalyseeinrichtung (16) durchgeführten Situationserkennung gestützt ist, bei welcher Fahrzeugdaten, Fahrzeugumfelddaten und Fahrerdaten zur Festlegung von Projektionsabstand und/ oder Position im Gesichtsfeld des Fahrers und/ oder Projektionsgröße berücksichtigt werden und die Situationsanalyseeinrichtung (16) aus den Fahrzeugdaten, Fahrzeugumfelddaten und Fahrerdaten die darstellungsbestimmenden Kriterien ermittelt, diese in einen Projektionsabstand und/ oder eine Position im Gesichtsfeld des Fahrers und/ oder eine Projektionsgröße überführt und damit als Ansteuerinformation die Projektionseinrichtung (1) beaufschlagt, so dass sich für das virtuelle Bild (10, 10', 10") ein virtueller Abstand (11, 11', 11", 11''') und/ oder eine Position und/ oder eine Größe einstellen, derart, dass die erforderlichen Akkomodations-, Fixations- und Adaptionszeiten des Fahrerauges (9) minimiert werden, **dadurch gekennzeichnet, dass** bei der Situationserkennung die Situationsanalyseeinrichtung (16) aus den Fahrzeugdaten, Fahrzeugumfelddaten und Fahrerdaten die darstellungsbestimmenden Kriterien ermittelt, diese in den Projektionsabstand und/ oder die Position im Gesichtsfeld des Fahrers und/ oder die Projektionsgröße überführt und damit als Ansteuerinformation die Projektionseinrichtung (1) beaufschlagt, so dass sich für das virtuelle Bild (10, 10', 10") der virtuelle Abstand (11, 11', 11", 11''') und/ oder die Position und/ oder die Größe einstellen, derart, dass sicherheitskritische Verdeckungen der realen Umgebung verhindert werden, dass als ein erstes wesentliches den virtuellen Abstand (11, 11', 11", 11''') bestimmendes Kriterium der wahrscheinliche augenblickliche Fokus (31, 31', 31") des Fahrers (32) durch die Situationsanalyseeinrichtung (16) bestimmt wird, und dass als weiteres wesentliches den virtuellen Abstand (11, 11', 11", 11'''), die Position im Gesichtsfeld des Fahrers (32) und Projektionsgröße bestimmendes Kriterium mittels der Situationsanalyseeinrichtung (16) bestimmt wird, ob sich im Gesichtsfeld des Fahrers (32) kritische Bereiche befinden, die durch das virtuelle Bild (10, 10', 10") nicht verdeckt werden dürfen.

2. Verfahren nach Anspruch 1, **dadurch gekennzeichnet, dass** es sich bei den Fahrzeugdaten um wenigstens eine der nachfolgenden Informationen handelt:
- die Eigengeschwindigkeit des Fahrzeugs
- den Blinkerzustand
- den Lenkwinkel
- Navigationsinformationen

3. Verfahren nach Anspruch 1, **dadurch gekennzeichnet, dass** es sich bei den Fahrzeugumfelddaten um wenigstens eine der nachfolgenden Informationen handelt:
- Tageszeit
- Abstand zum vorausfahrenden Fahrzeug
- geometrische Dimensionen des vorausfahrenden Fahrzeugs
- Position und Art weiterer Verkehrsteilnehmer
- Verkehrsdichte
- Merkmale der Verkehrs-Infrastruktur
- Straßentyp
- Straßenbeschaffenheit
- erlaubte Geschwindigkeit
- Wetterverhältnisse

4. Verfahren nach Anspruch 1, **dadurch gekennzeichnet, dass** es sich bei den Fahrerdaten um wenigstens eine der nachfolgenden Informationen handelt:
- Identität des Fahrers
- Augenposition relativ zum Combiner
- Müdigkeitsgrad
- momentane Beanspruchung
- Sehleistung
- Sehhilfe des Fahrers vorhanden oder nicht vorhanden

5. Verfahren nach Anspruch 1, **dadurch gekennzeichnet, dass** zur Situationserkennung zusätzlich Vorschaudaten herangezogen werden und dass es sich bei den Vorschaudaten um wenigstens eine der nachfolgenden Informationen handelt:
- den weiteren Streckenverlauf
- besondere Hindernisse im Verkehr
- Wetterveränderungen

6. Verfahren nach Anspruch 1, **dadurch gekennzeichnet, dass** die Fahrzeugdaten durch Auslesen aus einem Fahrzeugrechner (27) und/ oder durch Auslesen von Sensordaten aus Fahrzeugzustandssensoren gewonnen werden.

7. Verfahren nach Anspruch 1, **dadurch gekennzeichnet, dass** die Fahrzeugumfelddaten durch Auslesen aus dem Fahrzeugrechner (27) und/ oder Nutzung von Fahrzeugumfeldsensoren (17, 18, 22) und/ oder Fahrzeug-zu-Fahrzeug-Kommunikation (25) und/ oder Infrastruktur-zu-Fahrzeug-Kommunikation (26) und/ oder Nutzung digitaler Landkarten (20) in Verbindung mit einem GPS-System (21) und/ oder Nutzung von Verkehrsinformationen und / oder Nutzung von Wetterinformationen gewonnen werden.

8. Verfahren nach Anspruch 1, **dadurch gekennzeichnet, dass** die Fahrerdaten durch wenigstens eine der nachfolgenden Techniken ermittelt werden:
- durch Auslesen aus einem dem Fahrer zugeordneten Speichermedium,
- durch Identitätserkennung mittels Fingerabdrucksensor und/ oder Retinaabtastung und/ oder Stimmenanalyse und Zuordnung persönlicher Eigenschaften aus einem Speicher,
- durch Messen individueller körperbezogener Größen mittels Sensoren und/ oder Kameras und Interpretation der gemessenen Größen in einer Analyseeinheit,
- durch Analyse der Fahrweise des Fahrers durch Auswerten der Pedalaktivität und/ oder Lenkaktivität.

9. Verfahren nach Anspruch 1, **dadurch gekennzeichnet, dass** zur Bestimmung des wahrscheinlichen augenblicklichen Fokus (31, 31', 31") des Fahrers (32) wenigstens die Augenposition des Fahrers (32), die Art der aktuell befahrenen Fahrstrecke, das Vorhandensein eines vorausfahrenden Fahrzeugs (36) und gegebenenfalls dessen Entfernung herangezogen werden.

10. Verfahren nach einem der Ansprüche 1 bis 9, **dadurch gekennzeichnet, dass** in Abhängigkeit vom ersten Kriterium und/ oder vom weiteren Kriterium mittels der Situationsanalyseeinrichtung (16) der Projektionsabstand, die Projektionsposition und die Projektionsgröße festgelegt wird, derart, dass eine Anpassung des virtuellen Abstandes (11, 11', 11", 11''') an den wahrscheinlichen augenblicklichen Abstand des Fokus (31, 31', 31") des Fahrers (32) vorgenommen wird, so dass erforderliche Akkomodations-, Fixations- und Adaptionszeiten des Fahrerauges (9) minimiert und sicherheitskritische Verdeckungen der realen Umgebung verhindert werden und dass die Situationsanalyseeinrichtung (16) Steuerdaten, die den Projektionsabstand, die Projektionsposition und die Projektionsgröße einstellen, an die Projektionseinrichtung (1) als Einstelldaten übermittelt.

11. Verfahren nach Anspruch 10, **dadurch gekennzeichnet, dass** neben dem wahrscheinlichen augenblicklichen Fokus (31) des Fahrers (32) mittels der Situationsanalyseeinrichtung (16) ein wahrscheinlicher zukünftiger Fokus ermittelt wird und die Anpassung des Projektionsabstandes, der Projektionsposition und Projektionsgröße auf diesen zukünftigen Fokus von der Situationsanalyseeinrichtung (16) durch entsprechende Ansteuerung der Projektionseinrichtung (1) gleitend vorgenommen wird.

12. Verfahren nach Anspruch 11, **dadurch gekennzeichnet, dass** für die Bestimmung des wahrscheinlichen zukünftigen Fokus (31', 31") von der Situationsanalyseeinrichtung (16) die Tendenz der Geschwindigkeit des Fahrzeugs (30) und gegebenenfalls die Tendenz der Entfernung eines vorausfahrenden Fahrzeugs (36) herangezogen werden.

13. Verfahren nach Anspruch 11, **dadurch gekennzeichnet, dass** für die Bestimmung des wahrscheinlichen zukünftigen Fokus (31', 31") von der Situationsanalyseeinrichtung (16) der weitere Streckenverlauf und/ oder besondere Hindernisse im Verkehr und/ oder Wetterveränderungen herangezogen werden.

14. Anordnung zur Durchführung des Verfahrens nach einem der Ansprüche 1 bis 13, mit einer Projektionseinrichtung, wobei zur Anzeige von optischen Informationen in Fahrzeugen im zentralen Sichtfeld des Fahrers ein teilreflektierender Combiner (8, 8') vorgesehen ist der als Reflektor für die Projektionseinrichtung (1) dient und die Projektionseinrichtung (1) alphanumerische Informationen und/ oder grafischen Bildinhalte als virtuelles Bild (10, 10', 10) auf den Combiner (8, 8') projiziert derart, dass sich eine Überlagerung der alphanumerischen Informationen und/ oder grafischen Bildinhalte, d. h. virtuelles Bild, mit der realen Verkehrsumgebung ergibt, und dass die Projektionseinrichtung (1) so ausgebildet ist, dass deren Projektionsabstand und/ oder Projektionsgröße und/ oder Projektionsposition dynamisch veränderbar ist, derart, dass das vom Fahrer (32) wahrgenommene virtuelle Bild (10, 10', 10") der dargestellten Information in einem dynamisch veränderlichen virtuellen Abstand (11, 11', 11", 11''') relativ zur Position der Augen des Fahrers (32) und/ oder einer dynamisch veränderlichen Position im Gesichtsfeld des Fahrers (32) und/ oder in einer dynamisch veränderlichen Größe darstellbar ist, und dass eine Situationsanalyseeinrichtung (16) vorgesehen ist, wobei die Situationsanalyseeinrichtung (16) Fahrzeugdaten, Fahrzeugumfelddaten und Fahrerdaten zur Festlegung von Projektionsabstand und/ oder Projektionsposition und/ oder Projektionsgröße verwendet und hierzu mit einem Abstandsradar (17) und/ oder einer Nahumgebungssensorik (18) und/ oder einem Navigationssystem (19) mit digitaler Landkarte (20) und satellitengestützter Positionsbestimmung (GPS) (21) und/ oder einer Frontkamera (22) und/ oder einer Fahreridentifikationseinheit (23) und/ oder einer Fahrerbeobachtungssensorik (24) und/ oder einer Fahrzeug-zu-Fahrzeug-Kommunikationseinrichtung (25) und/ oder einer Infrastruktur-zu-Fahrzeug-Kommunikationseinrichtung (26) und/ oder einem Fahrzeugrechner (27) wirkverbunden ist, **dadurch gekennzeichnet, dass** die Situationsanalyseeinrichtung (16) bezogen auf die Verkehrssituation den wahrscheinlichen Fokus des Fahrers (32) ermittelt, und die Situationsanalyseeinrichtung (16) aus den Fahrzeugdaten, Fahrzeugumfelddaten und Fahrerdaten die darstellungsbestimmenden Kriterien ermittelt, diese in einen Projektionsabstand und/ oder eine Projektionsposition und/ oder eine Projektionsgröße überführt und über eine Wirkverbindung (15) mit der Projektionseinrichtung (1) diese so beaufschlagt, dass sich für das virtuelle Bild (10, 10', 10") ein virtueller Abstand (11, 11', 11", 11''') und/ oder eine Position und/ oder eine Größe einstellen, derart, dass die erforderliche Akkomodations-, Fixations- und Adaptionszeiten des Fahrerauges minimiert und sicherheitskritische Verdeckungen der realen Umgebung verhindert werden.

15. Fahrzeug, insbesondere Nutzfahrzeug, in dem ein Verfahren oder eine Vorrichtung nach einem der Ansprüche 1 bis 14 zur Anwendung kommt.

## Claims

1. Method for displaying visual information in vehicles in the central field of vision of the driver such that a combiner (8, 8') is used to produce an overlay of this display i.e. virtual image, with the real traffic environment, wherein a projection device (1) is provided whose projection distance and/or projection size and/or projection position is dynamically alterable such that the virtual image (10, 10', 10") that the driver (32) sees for the presented information is presentable at a dynamically variable virtual distance (11, 11', 11", 11''') relative to the position of the driver's eye (9) and/or a dynamically variable position in the field of vision of the driver (32) and/or in a dynamically variable projection size, wherein the stipulation of the virtual distance (11, 11', 11", 11'''), that can be regarded as ideal in each case on the basis of the situation, of the position in the field of vision of the driver (32) and of the projection size is based on situation recognition performed by means of a situation analysis device (16), which situation recognition involves vehicle data, vehicle surroundings data and driver data being taken into account for stipulating projection distance and/or position in the field of vision of the driver and/or projection size, and the situation analysis device (16) ascertains the presentation-determining criteria from the vehicle data, vehicle surroundings data and driver data, converts said criteria into a projection distance and/or a position in the field of vision of the driver and/or into a projection size and applies this/these as actuation information to the projection device (1), so that a virtual distance (11, 11', 11", 11''') and/or a position and/or a size are obtained for the virtual image (10, 10', 10") such that the required accommodation, fixation and adaptation times of the driver's eye (9) are minimized, **characterized in that** the situation recognition involves the situation analysis device (16) ascertaining the presentation-determining criteria from the vehicle data, vehicle surroundings data and driver data, converting said criteria into the projection distance and/or the position in the field of vision of the driver and/or into the projection size and applying this/these as actuation information to the projection device (1), so that the virtual distance (11, 11', 11", 11''') and/or the position and/or the size are obtained for the virtual image (10, 10', 10") such that safety-critical occlusions of the real environment are prevented, **in that** the probable instantaneous focus (31, 31', 31") of the driver (32) is determined by the situation analysis device (16) as a first essential criterion determining the virtual distance (11, 11', 11", 11''') and **in that** the situation analysis device (16) is used to determine, as a further essential criterion determining the virtual distance (11, 11', 11", 11'''), the position in the field of vision of the driver (32) and the projection size, whether the field of vision of the driver (32) contains critical areas that must not be occluded by the virtual image (10, 10', 10").

2. Method according to Claim 1, **characterized in that** the vehicle data are at least one of the following pieces of information:
- the vehicle's own speed
- the indicator state
- the steering angle
- navigation information.

3. Method according to Claim 1, **characterized in that** the vehicle surroundings data are at least one of the following pieces of information:
- time of day
- distance from the vehicle travelling in front
- geometric dimensions of the vehicle travelling in front
- position and type of further road users
- traffic density
- features of the traffic infrastructure
- road type
- road condition
- permitted speed
- weather conditions.

4. Method according to Claim 1, **characterized in that** the driver data are at least one of the following pieces of information:
- identity of the driver
- eye position relative to the combiner
- degree of tiredness
- current stress
- eyesight
- vision aid of the driver on hand or not on hand.

5. Method according to Claim 1, **characterized in that** situation recognition additionally involves the use of preview data and **in that** the preview data are at least one of the following pieces of information:
- the remainder of the route profile
- particular obstacles in the traffic
- weather changes.

6. Method according to Claim 1, **characterized in that** the vehicle data are obtained by reading them from a vehicle computer (27) and/or by reading sensor data from vehicle state sensors.

7. Method according to Claim 1, **characterized in that** the vehicle surroundings data are obtained by reading them from the vehicle computer (27) and/or using vehicle ambient sensors (17, 18, 22) and/or vehicle-to-vehicle communication (25) and/or infrastructure-to-vehicle communication (26) and/or using digital maps (20) in conjunction with a GPS system (21) and/or using traffic information and/or using weather information.

8. Method according to Claim 1, **characterized in that** the driver data are ascertained by means of at least one of the following techniques:
- by reading them from a storage medium associated with the driver,
- by means of identity recognition by means of fingerprint sensor and/or retinal scanning and/or voice analysis and association of personal characteristics from a memory,
- by measuring individual body-related variables by means of sensors and/or cameras and interpreting the measured variables in an analysis unit,
- by analysing the driving of the driver by evaluating pedal activity and/or steering activity.

9. Method according to Claim 1, **characterized in that** the probable instantaneous focus (31, 31', 31") of the driver (32) is determined by using at least the eye position of the driver (32), the type of driving route currently being driven, the presence of a vehicle (36) travelling in front and, if need be, the distance of said vehicle.

10. Method according to one of Claims 1 to 9, **characterized in that** the first criterion and/or the further criterion are taken as a basis for using the situation analysis device (16) to stipulate the projection distance, the projection position and the projection size such that matching of the virtual distance (11, 11', 11", 11''') to the probable instantaneous distance of the focus (31, 31', 31 ") of the driver (32) is performed, so that required accommodation, fixation and adaptation times of the driver's eye (9) are minimized and safety-critical occlusions of the real environment are prevented, and that the situation analysis device (16) transmits control data that set the projection distance, the projection position and the projection size to the projection device (1) as adjustment data.

11. Method according to Claim 10, **characterized in that** besides the probable instantaneous focus (31) of the driver (32), the situation analysis device (16) is used to ascertain a probable future focus, and the matching of the projection distance, the projection position and projection size to this future focus is performed by the situation analysis device (16) on a sliding basis by means of appropriate actuation of the projection device (1).

12. Method according to Claim 11, **characterized in that** the probable future focus (31', 31") is determined by the situation analysis device (16) by using the trend in the speed of the vehicle (30) and, if need be, the trend in the distance of a vehicle (36) travelling in front.

13. Method according to Claim 11, **characterized in that** the probable future focus (31', 31") is determined by the situation analysis device (16) by using the remainder of the route profile and/or particular obstacles in the traffic and/or weather changes.

14. Arrangement for performing the method according to one of Claims 1 to 13, having a projection device, wherein a partially reflective combiner (8, 8') is provided for the purpose of displaying visual information in vehicles in the central field of vision of the driver, said combiner being used as a reflector for the projection device (1), and the projection device (1) projects alphanumeric information and/or graphical image content onto the combiner (8, 8') as a virtual image (10, 10', 10) such that there is a resultant overlay of the alphanumeric information and/or graphical image content, i.e. virtual image, with the real traffic environment, and that the projection device (1) is designed such that the projection distance and/or projection size and/or projection position thereof is dynamically alterable such that the virtual image (10, 10', 10") that the driver (32) sees for the presented information is presentable at a dynamically variable virtual distance (11, 11', 11", 11''') relative to the position of the eyes of the driver (32) and/or a dynamically variable position in the field of vision of the driver (32) and/or in a dynamically variable size, and that a situation analysis device (16) is provided, wherein the situation analysis device (16) uses vehicle data, vehicle surroundings data and driver data to stipulate projection distance and/or projection position and/or projection size and, to this end, is operatively connected to a distance radar (17) and/or a local environment sensor system (18) and/or a navigation system (19) with a digital map (20) and satellite-assisted position finding (GPS) (21) and/or a front camera (22) and/or a driver identification unit (23) and/or a driver observation sensor system (24) and/or a vehicle-to-vehicle communication device (25) and/or an infrastructure-to-vehicle communication device (26) and/or a vehicle computer (27), **characterized in that** the situation analysis device (16) ascertains the probable focus of the driver (32) based on the traffic situation, and the situation analysis device (16) ascertains the presentation-determining criteria from the vehicle data, vehicle surroundings data and driver data, converts said criteria into a projection distance and/or a projection position and/or a projection size and uses an operative connection (15) and the projection device (1) to apply this/these to the latter such that a virtual distance (11, 11', 11", 11''') and/or a position and/or a size are obtained for the virtual image (10, 10', 10") such that the required accommodation, fixation and adaptation times of the driver's eye are minimized and safety-critical occlusions of the real environment are prevented.

15. Vehicle, in particular commercial vehicle, in which a method or an apparatus according to one of Claims 1 to 14 is used.

## Revendications

1. Procédé destiné à l'affichage d'informations optiques dans le champ de vision central du conducteur, dans des véhicules, de telle sorte qu'il en résulte une superposition de cet affichage, c'est-à-dire de l'image virtuelle, avec les conditions réelles de la circulation, au moyen d'un multiplexeur (8, 8'), dans lequel un système de projection (1) est prévu, dont la distance de la projection et/ou la taille de la projection et/ou la position de la projection peuvent être modifiées de manière dynamique, de telle sorte que l'image virtuelle (10, 10', 10") des informations représentées qui est perçue par le conducteur (32) peut être représentée dans une distance virtuelle (11, 11', 11", 11 '''), laquelle est variable de manière dynamique, par rapport à la position des yeux du conducteur (9) et/ou à une position dans le champ de vision du conducteur (32), laquelle est variable de manière dynamique, et/ou dans une taille de projection, laquelle est variable de manière dynamique, dans lequel la détermination de la distance virtuelle (11, 11', 11", 11'''), laquelle doit être considérée respectivement comme étant idéale par rapport à la situation, de la position dans le champ de vision du conducteur (32) et de la taille de la projection est assistée par une reconnaissance de la situation, laquelle est réalisée au moyen d'un système d'évaluation de la situation (16), et pour laquelle des données du véhicule, des données de l'environnement du véhicule et des données du conducteur sont prises en considération en vue de la détermination de la distance de la projection et/ou de la position dans le champ de vision du conducteur et/ou de la taille de la projection, et pour laquelle reconnaissance de la situation le système d'évaluation de la situation (16) calcule les critères déterminant la représentation à partir des données du véhicule, des données de l'environnement du véhicule et des données du conducteur, les transfère dans une distance de la projection et/ou dans une position dans le champ de vision du conducteur et/ou dans une taille de la projection et sollicite par conséquent le système de projection (1) sous la forme d'informations de commande pour la conduite, de telle sorte qu'une distance virtuelle (11, 11', 11", 11''') et/ou une position et/ou une taille peuvent être paramétrées pour l'image virtuelle (10, 10', 10"), de telle sorte que le temps nécessaire à l'acclimatation, à la fixation et à l'adaptation des yeux du conducteur (9) est réduit le plus possible, **caractérisé en ce que**, dans le cadre de la reconnaissance de la situation, le système d'évaluation de la situation (16) calcule les critères déterminant la représentation à partir des données du véhicule, des données de l'environnement du véhicule et des données du conducteur, les transfère dans la distance de la projection et/ou dans la position dans le champ de vision du conducteur et/ou dans la taille de la projection et sollicite par conséquent le système de projection (1) sous la forme d'informations de commande pour la conduite, de telle sorte que la distance virtuelle (11, 11', 11", 11''') et/ou la position et/ou la taille peuvent être paramétrées pour l'image virtuelle (10, 10', 10"), de telle sorte que les effets de masque de l'environnement réel qui sont critiques pour la sécurité sont empêchés, **caractérisé en ce que** la concentration (31, 31', 31") momentanée probable du conducteur (32) est déterminée par le système d'évaluation de la situation (16) sous la forme d'un premier critère essentiel déterminant la distance virtuelle (11, 11', 11", 11'''), et **caractérisé en ce que** le système d'évaluation de la situation (16) permet de déterminer, sous la forme d'un autre critère essentiel déterminant la distance virtuelle (11, 11', 11", 11 '''), la position dans le champ de vision du conducteur (32) et la taille de la projection, si des zones critiques qui ne doivent pas être dissimulées par l'image virtuelle (10, 10', 10") se trouvent dans le champ de vision du conducteur (32).

2. Procédé selon la revendication 1, **caractérisé en ce que** les données du véhicule proprement dites concernent tout au moins l'une des informations suivantes :
- la vitesse propre du véhicule ;
- l'état des clignotants ;
- l'angle de braquage ;
- les informations de navigation.

3. Procédé selon la revendication 1, **caractérisé en ce que** les données de l'environnement du véhicule proprement dites concernent tout au moins l'une des informations suivantes :
- l'heure du jour ;
- la distance avec le véhicule qui précède ;
- les dimensions géométriques du véhicule qui précède ;
- la position et la nature des autres usagers de la route ;
- la densité du trafic ;
- les caractéristiques de l'infrastructure routière ;
- le type de la route utilisée ;
- les propriétés de la route utilisée ;
- la vitesse maximale autorisée ;
- les conditions météorologiques.

4. Procédé selon la revendication 1, **caractérisé en ce que** les données du conducteur proprement dites concernent tout au moins l'une des informations suivantes :
- l'identité du conducteur ;
- la position des yeux par rapport au multiplexeur ;
- le niveau de fatigue ;
- la sollicitation actuelle ;
- les capacités visuelles ;
- la présence ou l'absence d'aides visuelles pour le conducteur.

5. Procédé selon la revendication 1, **caractérisé en ce que** des données prévisionnelles sont en outre prises en considération en vue de la reconnaissance de la situation, **caractérisé en ce que** les données prévisionnelles proprement dites concernent tout au moins l'une des informations suivantes :
- la poursuite du déroulement du trajet ;
- les obstacles particuliers de la circulation ;
- les changements des conditions météorologiques.

6. Procédé selon la revendication 1, **caractérisé en ce que** les données du véhicule sont obtenues à partir de la lecture d'un ordinateur de bord (27) et/ou de la lecture des données de détection issues des capteurs de l'état du véhicule.

7. Procédé selon la revendication 1, **caractérisé en ce que** les données de l'environnement du véhicule sont obtenues à partir de la lecture de l'ordinateur de bord (27) et/ou en utilisant les capteurs environnementaux du véhicule (17, 18, 22) et/ou en utilisant la communication véhicule à véhicule (25) et/ou en utilisant la communication infrastructure à véhicule (26) et/ou en utilisant des cartes géographiques (20) numériques en combinaison avec un système GPS (21) et/ou en utilisant les informations relatives au trafic et/ou en utilisant les informations relatives à la météo.

8. Procédé selon la revendication 1, **caractérisé en ce que** les données du conducteur sont calculées selon tout au moins l'une des techniques suivantes :
- à partir de la lecture d'un support de stockage associé au conducteur ;
- à partir de la reconnaissance de l'identité, au moyen d'un capteur d'empreinte digitale et/ou d'un système de balayage de la rétine et/ou d'un système d'analyse vocale et en associant des caractéristiques personnelles à partir d'un support de stockage ;
- à partir de la mesure de variables individuelles qui sont fonction du corps, au moyen de détecteurs et/ou de caméras et à partir de l'interprétation des variables mesurées dans une unité d'analyse ;
- à partir de l'analyse de la manière de conduire du conducteur, en évaluant les activités relatives aux pédales et/ou les activités relatives au guidage du volant.

9. Procédé selon la revendication 1, **caractérisé en ce que** tout au moins la position des yeux du conducteur (32), la nature du trajet qui est en train d'être parcouru, la présence éventuelle d'un véhicule qui précède (36) et, le cas échéant, sa distance par rapport au véhicule du conducteur sont prises en considération en vue de la détermination de la concentration (31, 31', 31 ") momentanée probable du conducteur (32).

10. Procédé selon l'une des revendications 1 à 9, **caractérisé en ce que** la distance de la projection, la position de la projection et la taille de la projection sont déterminées au moyen du système d'évaluation de la situation (16), en fonction du premier critère et/ou de l'autre critère, de telle sorte qu'un ajustement de la distance virtuelle (11, 11', 11", 11''') est réalisé vis-à-vis de la distance momentanée probable liée à la concentration (31, 31', 31") du conducteur (32), de telle sorte que le temps nécessaire à l'acclimatation, à la fixation et à l'adaptation des yeux du conducteur (9) est réduit le plus possible et que les effets de masque de l'environnement réel qui sont critiques pour la sécurité sont empêchés, et **caractérisé en ce que** le système d'évaluation de la situation (16) transmet des données de contrôle au système de projection (1), sous la forme de données d'ajustement qui permettent de paramétrer la distance de la projection, la position de la projection et la taille de la projection.

11. Procédé selon la revendication 10, **caractérisé en ce que**, en plus de la concentration (31) momentanée probable du conducteur (32), sa future concentration probable est calculée au moyen du système d'évaluation de la situation (16) et l'ajustement de la distance de la projection, de la position de la projection et de la taille de la projection est réalisé en douceur sur la base de cette future concentration probable, par l'intermédiaire du système d'évaluation de la situation (16), par une commande correspondante du système de projection (1).

12. Procédé selon la revendication 11, **caractérisé en ce que** la tendance de la vitesse du véhicule (30) et, le cas échéant, la tendance de la distance par rapport à un véhicule qui précède (36) sont prises en considération par le système d'évaluation de la situation (16) pour la détermination de la future concentration probable (31', 31") du conducteur.

13. Procédé selon la revendication 11, **caractérisé en ce que** la poursuite du déroulement du trajet et/ou les obstacles particuliers de la circulation et/ou les changements des conditions météorologiques sont pris en considération par le système d'évaluation de la situation (16) pour la détermination de la future concentration probable (31', 31") du conducteur.

14. Agencement en vue de la réalisation du procédé selon l'une des revendications 1 à 13, avec un système de projection, dans lequel un multiplexeur (8, 8') partiellement réfléchissant est prévu en vue de l'affichage d'informations optiques dans le champ de vision central du conducteur, dans des véhicules, lequel multiplexeur sert de réflecteur pour le système de projection (1) et le système de projection projette des informations alphanumériques et/ou des contenus d'images graphiques, sous la forme d'une image virtuelle (10, 10', 10"), sur le multiplexeur (8, 8') de telle sorte qu'il en résulte une superposition des informations alphanumériques et/ou des contenus d'images graphiques, c'est-à-dire une image virtuelle, avec les conditions réelles de la circulation, et **caractérisé en ce que** le système de projection (1) est conçu de telle sorte que sa distance de projection et/ou sa taille de projection et/ou sa position de projection peuvent être modifiées de manière dynamique, de telle sorte que l'image virtuelle (10, 10', 10") des informations représentées, qui est perçue par le conducteur (32), peut être représentée dans une distance virtuelle (11, 11', 11", 11'''), laquelle est variable de manière dynamique, par rapport à la position des yeux du conducteur (32) et/ou par rapport à une position dans le champ de vision du conducteur (32), laquelle est variable de manière dynamique, et/ou dans une taille, laquelle est variable de manière dynamique, et **caractérisé en ce qu'**un système d'évaluation de la situation (16) est prévu, dans lequel le système d'évaluation de la situation (16) utilise les données du véhicule, les données de l'environnement du véhicule et les données du conducteur en vue de la détermination de la distance de la projection et/ou de la position de la projection et/ou de la taille de la projection et, à cet effet, est relié de façon opérationnelle avec un radar de distance (17) et/ou un détecteur de proximité (18) et/ou un système de navigation (19) équipé de cartes géographiques (20) numériques et d'un système de détermination de la position assisté par satellite (GPS) (21) et/ou d'une caméra avant (22) et/ou d'une unité d'identification du conducteur (23) et/ou d'un détecteur d'observation du conducteur (24) et/ou d'un système de communication véhicule à véhicule (25) et/ou d'un système de communication infrastructure à véhicule (26) et/ou d'un ordinateur de bord (27), **caractérisé en ce que** le système d'évaluation de la situation (16) calcule la concentration probable du conducteur (32) par rapport à la situation du trafic et le système d'évaluation de la situation (16) calcule des critères déterminant la représentation à partir des données du véhicule, des données de l'environnement du véhicule et des données du conducteur, les transfère dans une distance de la projection et/ou dans une position de la projection et/ou dans une taille de la projection et les sollicite par l'intermédiaire d'une liaison active (15) avec le système de projection (1), de telle sorte qu'une distance virtuelle (11, 11', 11", 11''') et/ou une position et/ou une taille peuvent être paramétrées pour l'image virtuelle (10, 10', 10"), de telle sorte que le temps nécessaire à l'acclimatation, à la fixation et à l'adaptation des yeux du conducteur est réduit le plus possible et que les effets de masque de l'environnement réel qui sont critiques pour la sécurité sont empêchés.

15. Véhicule, en particulier véhicule utilitaire, dans lequel est employé un procédé ou un dispositif selon l'une des revendications 1 à 14.
